# EUROPEAN PATENT SPECIFICATION

(11) **EP 1 271 220 B1**
(45) Date of publication and mention of the grant of the patent: **12.08.2009**
(21) Application number: 01115845.8
(22) Date of filing: 28.06.2001
(51) Int. Cl.: G02F 1/035, G02F 1/225

(54) **Coplanar integrated optical waveguide electro-optical modulator**
Elektrooptischer Modulator mit integriertem koplanaren optischen Wellenleiter
Modulateur électro-optique avec un guide d'onde optique coplanaire intégré

(43) Date of publication of application: 02.01.2003
(73) Proprietor: Avanex Corporation, Fremont, CA 94538 (US)
(72) Inventor: Pruneri, Valerio, 23033 Grosio (SO) (IT); Nespola, Antonino, 10024 Moncalieri (TO) (IT)
(74) Representative: McGowan, Cathrine

(56) References cited:
- US-A- 5 388 170
- US-A- 5 515 463
- US-A- 5 930 412
- PATENT ABSTRACTS OF JAPAN vol. 1999, no. 13, 30 November 1999 (1999-11-30) -& JP 11 231358 A (NEC CORP), 27 August 1999 (1999-08-27)
- PATENT ABSTRACTS OF JAPAN vol. 1995, no. 10, 30 November 1995 (1995-11-30) & JP 07 191352 A (MITSUBISHI CABLE IND LTD), 28 July 1995 (1995-07-28)
- WANG W ET AL: "PUSH-PULL POLED POLYMER MACH-ZEHNDER MODULATORS WITH A SINGLE MICROSTRIP LINE ELECTRODE" IEEE PHOTONICS TECHNOLOGY LETTERS, IEEE INC. NEW YORK, US, vol. 11, no. 1, January 1999 (1999-01), pages 51-53, XP000801387 ISSN: 1041-1135
- NOGUCHI K ET AL: "MILLIMETER-WAVE TI:LINBO3 OPTICAL MODULATORS" JOURNAL OF LIGHTWAVE TECHNOLOGY, IEEE. NEW YORK, US, vol. 16, no. 4, 1 April 1998 (1998-04-01), pages 615-619, XP000768968 ISSN: 0733-8724

## Description

The present invention relates generally to the field of integrated optics. More specifically, the invention relates to integrated optical waveguide electro-optical modulators, that is devices based on the electro-optic effect in which optical beams propagate through optical waveguides integrated in an electro-optic substrate material, particularly optical intensity, *i.e.* amplitude, interferometric modulators of the Mach-Zehnder type. Still more particularly, the invention relates to a coplanar integrated optical waveguide electro-optical modulator, in which the electrodes necessary for applying a modulating electric field are arranged on a same substrate surface.

Integrated electro-optical devices, such as modulators and switches, are fabricated on substrates of electro-optic material. Among all the known substrate materials, lithium niobate (LiNbO₃) is probably the most widely used because of the enhanced electro-optic properties thereof and the possibility of making low loss optical waveguides. Another known substrate material is for example lithium tantalate (LiTaO₃)

Electro-optic materials show an electro-optic response, a second-order non-linear property which is characterised by a tensor. This tensor relates the polarization changes at optical frequencies (*i.e.,* refractive index changes) of the material to low-frequency modulating electric fields, that is modulating electric fields at frequencies much lower than those of the optical fields. Phase and amplitude modulation of optical fields can be obtained by applying external electric fields, which modify the material refractive index via the electro-optic effect.

Overlooking, for simplicity, the tensorial nature of the electro-optic effect, the refractive index change Δn (ω) at the optical frequency ω is proportional to the product of an electro-optic coefficient r and the modulating electric field Eo: Δn(ω) ∝ r·Eo.

In the case of a LiNbO₃ crystal the electro-optic coefficient having the highest value is r₃₃ ≈ 30 pm/V. The electro-optic coefficient r₃₃ relates the refractive index change experienced by electromagnetic waves polarised along the c (also called z) crystal axis to the component of the modulating electric field along the same axis.

For this reason LiNbO₃ crystal substrates are generally made available in z-cut slices, with the z crystal axis normal to the substrate surfaces of largest area, since this configuration is the one ensuring superior modulation performances even at relatively high modulation frequencies.

A Mach-Zehnder interferometric electro-optical modulator is a device capable of providing an electrically-induced amplitude modulation of an optical signal. In a Mach-Zehnder interferometric electro-optical modulator the voltage required to drive the modulator is reduced when the two optical modes propagating along the two interferometer arms experience changes of the refractive index having opposite sign. This is achieved by properly designing the electrode geometry, so that the component of the modulating electric field along the z axis has opposite signs (*i.e.* opposite orientations with respect to the z axis orientation) in the two interferometer arms. The resulting device is said to have a push-pull configuration.

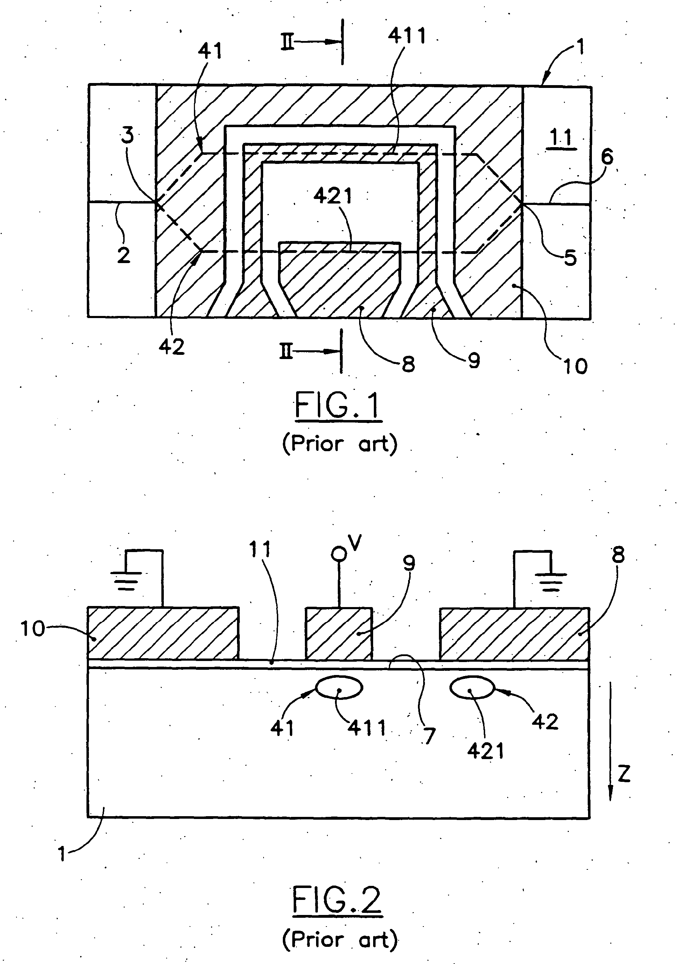

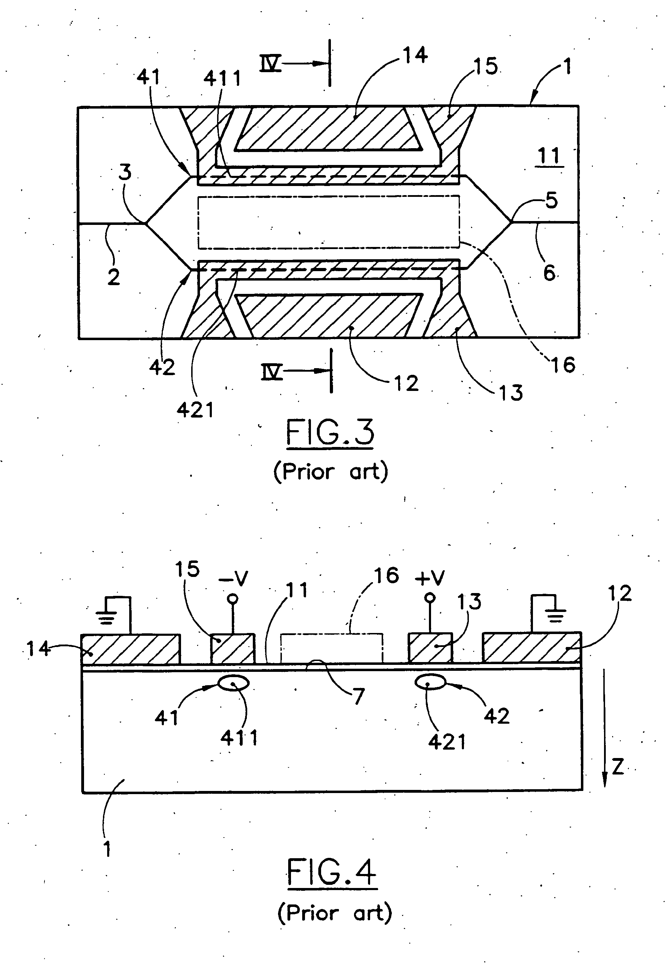

Figures 1 to 4 show typical examples of push-pull Mach-Zehnder interferometric electro-optical modulators. Specifically, Figures 1 and 2 schematically show, respectively in top-plan and in cross-sectional views, a so-called coplanar waveguide ("CPW") configuration. Figures 3 and 4 schematically show, again in top plan and in cross-section, a so-called double coplanar strip ("CPS") configuration.

The electro-optic performances of devices based on the above cited configurations are extensively described in literature. For example, the performances of the CPW configuration is discussed in K. Noguchi et al., '40-Gbit/s Ti:LiNbO3 optical modulator with a two-stage electrode', IEICE Trans. Electron., vol. E81-C, p. 316 (1998) and in K. Noguchi et al., 'Millimiter-wave Ti:LiNbO3 optical modulators', J. of Lightwave Tech., vol.16, p.615 (1998). The double CPS configuration is for instance described in US 5,388,170.

Referring to Figures 1 and 2, in a z-cut LiNbO₃ substrate **1** a Mach-Zehnder interferometer is integrated comprising an input optical waveguide **2** or input channel, a first Y-junction **3** for splitting an input optical signal propagating along the input waveguide **2** into two optical signals propagating along two generally parallel optical waveguides **41, 42** forming the interferometer arms, a second Y-junction **5,** spaced apart from the first Y-junction, for combining the two optical signals into an output optical signal propagating along an output optical waveguide **6** or output channel. The waveguides **2, 41, 42** and **6** are formed by conventional techniques in correspondence of a surface **7** of the substrate **1** perpendicular to the z crystal axis. The substrate forms a single ferroelectric domain so that throughout the substrate the z crystal axis keeps a same orientation, for example the orientation shown by the arrow in Figure 2.

In the region of the interferometer arms, a first metal electrode **8** is superimposed over the surface **7** above the waveguide **42** and extends for a section **421** thereof, a second metal electrode **9** is superimposed over the surface **7** above the waveguide **41** and extends for a section **411** thereof substantially corresponding to the section **421** of the waveguide **42,** and a third metal electrode **10** is superimposed over the surface **7** and extends, laterally to the second electrode **9** and on the opposite side of the first electrode **8,** for a segment substantially corresponding to the section **411** of waveguide **41.** Conventionally, a buffer layer **11,** typically of silicon dioxide (SiO₂), is formed over the surface **7** for separating the metal electrodes **8, 9** and **10** from the optical fields in the waveguides **41, 42** so to avoid attenuation of said optical fields.

The electrodes **8, 9** and **10** are used for applying a modulating electric field useful for varying, by electro-optic effect, the refractive index in the two waveguides **41, 42.** The electrodes **8** and **10** are electrically connected to a reference potential (ground), and are therefore called ground electrodes. The electrode **9** is electrically connected to a modulating potential **V,** and is called hot electrode. The shape and layout of the electrodes are properly designed so as to allow the operation of the device up to the microwave region of the spectrum of the modulating electric field. By applying a modulating electric field, the refractive index of the two waveguides **41, 42** undergoes opposite variations and the optical signals propagating along such waveguides correspondingly undergo opposite phase shifts (push-pull effect). An amplitude modulated output optical signal is thus obtained in waveguide **6,** the amplitude depending on the overall phase shift.

The main disadvantage of the CPW configuration is the asymmetry of the structure, which gives rise to an asymmetry in the interaction between each optical mode propagating along the interferometer arms and the modulating electric field. Such an asymmetry causes different phase shifts in the two interferometer arms, thus inducing chirps in the phase of the amplitude modulated output optical field. This asymmetry is inherent to the device, since in order to have opposite phase shifts in the two interferometer arms the two waveguides must be placed one under the hot electrode and the other under the ground electrode. The efficiency of the phase shift induced on the optical mode propagating through a waveguide by the modulating electric field depends on the overlap between the modulating electric field and the optical mode, and is expressed by an overlap factor Γ. The ratio of the overlap factors Γh in the waveguide **41** under the hot electrode **9** and Γg in the waveguide **42** under the ground electrode **8** is significantly high, reaching typical values of 6, so significantly different phase shifts take place in the two waveguides.

In the double CPS configuration of Figures **3** and **4****,** two hot electrodes **13** and **15** are provided, respectively superimposed over and extending for corresponding sections **421** and **411** of the waveguides **42** and **41.** Two ground electrodes **12** and **14** are also provided, respectively adjacent a respective one of the hot electrodes **13** and **15.** The two hot electrodes **13, 15** are electrically connected to modulating potentials **+V, -V** of opposite sign with respect to the ground potential. For this reason, this configuration is also called dual-drive.

In some cases, a third ground electrode, shown in dash and dot in the drawings and identified by **16,** can be provided in between the hot electrodes **13** and **15,** so that each of the latter extends between two ground electrodes. The resulting structure, ensuring a still higher symmetry, is said to have a double CPW configuration.

The double CPS configuration, as well as the double CPW one, does not suffer of the problem previously discussed in connection with the CPW configuration and is therefore referred to as chirp-free. However, the need for a dual drive significantly increases the complexity of the electronic circuits generating the driving potentials of opposite sign. This is a great disadvantage of the double CPS configuration.

JP 07-191352 discusses the problems of an optical waveguide device, such as a directional coupling optical switch, in which mutual exchange of wave energy between the waveguides takes place. This device, which is clearly different from an electro-optical modulator since in the latter no exchange of wave energy takes place between the waveguides, comprises a crystal substrate formed from a z-cut LiNbO₃ crystal, in which two optical waveguides are formed adjacent and parallel to each other in the substrate surface. The device has a coupling region, that is the region of the substrate wherein the mutual exchange of wave energy between the waveguides takes place. Positive and negative electrodes are formed on the same substrate surface as the optical waveguides, with interposition of a buffer layer, and extend parallelly to each other in partial overlap with a respective waveguide. An electric field which curves toward the negative electrode from the positive electrode is generated, which has an action in approximately reverse directions, with respect to the z crystal axis, in the two waveguides.

According to JP 07-191352, in this configuration the direction of action of the electric field in the two optical waveguides is only approximately reverse, so there is a large loss of electric field action compared to a case of perfectly reverse directions. In addition, in order to ensure the most effective action of the electric field on both optical waveguides, fine position adjustment is necessary, by way of example edge sections of the electrodes are matched to the optimum position in the central region of the optical waveguide device so that the dense section of the electric field is concentrated on the optical waveguides. High-precision position adjustment of this kind on the minute optical waveguides is extremely difficult and hinders productivity improvements. Furthermore, because the positive and negative electrodes are formed in alignment on the same surface of the crystal substrate, a phenomenon (DC drift) is generated in which the operation voltage fluctuates due to the presence of the buffer layer between both electrodes, and this presents a significant problem in terms of actual application.

In that document the coplanar electrode arrangement is therefore excluded and a device is described which allegedly solves these problems. In the described device a pair of optical waveguides, formed on the surface of a z-cut lithium niobate crystal substrate, perform a mutual exchange of wave energy in a coupling area of the substrate. The z axis directions of the crystal, from which the optical waveguides are formed, are formed in mutually reverse directions, and opposing and parallel flat-plate positive and negative electrodes are arranged in the upper and lower surfaces of the crystal substrate. Based on this configuration, by the action of a linear, uniform and parallel electric field formed between the opposing flat-plate electrodes, an action in the respective reverse directions with respect to the z axis of the optical waveguides is effected.

The solution proposed by JP 07-191352 is based on the known property of ferroelectric materials that the signs of the non-linear optical coefficient (identified as d) and electro-optic coefficient (r) are related to the orientation of the ferroelectric domain, i.e. to the orientation of the spontaneous polarization of the crystal. When the orientation of the crystal spontaneous polarization is inverted both d and r change sign, being the manifestation of the second-order non-linear material response to, respectively high and low frequency, electromagnetic fields.

This phenomenon has been exploited in laser-diode-based second-harmonic generation (SHG) devices to achieve highly efficient quasi-phase-matched frequency conversion, as reported in M. Yamada et al., 'First-order quasi-phase-matched LiNbO3 waveguide periodically poled by applying an external field for efficient blue second-harmonic generation', Appl. Phys. Lett., vol. 62, p. 435 (1993).

In connection with electro-optical modulators, the effects of ferroelectric domain inversion have been exploited in US 5,278,924 for obtaining an opto-electric modulator which compensates for phase velocity mismatches between optical modulation and an RF electric signal.

Both in SHG devices and in the device disclosed in US 5,278,924 a suitable periodically inverted ferroelectric domain structure is requested and the optical modes propagate through many ferroelectric domain boundaries. The linear loss due to scattering and reflection at these boundaries is often below the detection level, in any case negligible when compared to any waveguide loss. In fact it is well known that differently oriented domains have the same linear dielectric properties (the refractive index is the same in differently oriented domains).

For example, in US 5,278,924 an integrated optic Mach-Zehnder interferometer with an asymmetric coplanar waveguide travelling wave electrode is formed in a substrate which has a ferroelectric domain that has inverted regions and non-inverted regions. The inverted and non-inverted regions extend parallel to each other transversally to the interferometer arms in alternated succession along the arms. The optical signal in each interferometer arm passes through the inverted and non-inverted regions of the ferroelectric domain. Each transition between inverted and non-inverted regions changes the sign of the induced phase modulation of the optical signal. This compensates for 180° phase difference between the modulation on the optical signal and the RF electric signal caused by the phase velocity mismatch between the RF and optical signals.

In still another context, in US 5,267,336 the effects of ferroelectric domain inversion have been exploited to obtain an electric field sensor useful in detecting and measuring wideband transient electrical responses by means of an integrated optical waveguide Mach-Zehnder interferometer without any electrodes. This document addresses the drawbacks of conventional electro-optical sensors, in which an external electric field to be measured is picked up by an antenna and converted to a voltage which is then applied to appropriate electrodes positioned on or near the interferometer arms in such a way as to create electric fields in opposite directions in each of the two interferometer arms. According to this document, in a variety of applications that require the measurement of electric fields the presence of a metal electrode tends to disturb the electric field under measurement. In severe cases the close proximity of the electrodes could create arcing, thus creating a short circuit. The metal electrode also tends to limit the frequency response of the sensor due to the capacitive nature of the electrical circuit. This electrical circuit could also pose hazard in the presence of combustible or explosive materials. Therefore, according to this document, there is the desire to have electric field sensors that do not require any metal electrodes. According to this document, this is achieved by reversing the ferroelectric domains of one of the two interferometer arms, so that an external vertically directed electric field produce equal and opposite phase shifts in the two interferometer arms, leading to a total phase shift as experienced by the conventional electrode device.

JP 11231358 discloses an eletro-optical modulator according to the preamble of claim 1.

The Applicant has observed that coplanar electrode arrangements are advantageous over non-coplanar counterparts, especially in high-frequency applications.

The Applicant has also found that exploiting the effect of sign reversal of the electro-optic coefficient to realise coplanar integrated electro-optical Mach-Zehnder type modulators in an electro-optic material substrate, for example by means of ferroelectric domain inversion in ferroelectric materials such as LiNbO₃, so that at least in a modulating region of the device the sign of the electro-optic coefficient is different in one interferometer arm with respect to the other, new and advantageous modulator structures can be devised with respect to single domain electro-optic substrates. Such structures include for example a chirp-free coplanar waveguide modulator (where only one hot electrode is used) and a single-drive double coplanar strip modulator (where two hot electrodes are used).

According to one aspect of the invention, a coplanar integrated optical waveguide electro-optical modulator is provided, comprising:
- a substrate of an electro-optic material;
- at least two optical waveguides integrated in the substrate in correspondence of a surface thereof, and
- an electrode system arranged on said surface for applying a modulating electric field to the waveguides suitable for causing a modulation of a refractive index of the two waveguides in a device modulation region,
**characterised in that**
the waveguides are formed, for at least a section thereof in the device modulation region, in substrate regions that comprise successions of at least two substrate regions having electro-optic coefficients with alternated sign. Each succession is passed through by a respective one of the at least two waveguides. Pairs of regions in the successions which are substantially aligned in the direction transversal to the waveguides have electro-optic coefficients of mutually opposite sign. Thus, a modulating electric field of same direction and orientation in the waveguide sections causes refractive index modulations of opposite sign in the waveguide sections. In one embodiment, the waveguide sections and the respective substrate regions having electro-optic coefficients of opposite sign extend substantially for the whole device modulation region.

The electrode system may comprise at least two ground electrodes each one extending over said section of a respective waveguide, and at least a hot electrode extending between the ground electrodes. The electrodes thus form a coplanar waveguide electrode system.

Alternatively, the electrode system may comprise one hot electrode extending over said sections of the waveguides, and at least one ground electrode extending at the side of the hot electrode. Also in this case, the electrodes form a coplanar waveguide electrode system, but a drive voltage to be applied to the hot electrode can be reduced.

In this case, since the waveguides shall be spaced apart of a distance suitable to substantially prevent optical coupling therebetween in the modulation region, the hot electrode preferably comprises a wider portion having a width equal to or higher than said distance, and a narrower portion on the top of the wider portion.

In another embodiment, the electrode system comprises two hot electrodes, each one extending over said section of a respective waveguide, for receiving a same modulating voltage, and at least one ground electrode extending aside the hot electrodes, so as to form a double coplanar strip electrode system.

Preferably, the at least one ground electrode comprises two ground electrodes, each one extending aside a respective hot electrode on an side thereof opposite to the other hot electrode.

In a preferred embodiment, the coplanar integrated optical waveguide electro-optical modulator has an electrode system comprising an integrated power splitter for receiving an externally-generated modulating voltage and supplying it to the two hot electrodes.

Outside the modulation region the waveguides are optically connected by means of respective Y-junctions to an input waveguide and an output waveguide. The two hot electrodes may merge together at said Y-junctions and have extensions over the input and output waveguides.

Preferably, the ground electrodes extend aside said extensions so as to form, in correspondence of the input and output waveguides, coplanar waveguide electrode systems.

In case the substrate of electro-optic material is a z-cut substrate of ferroelectric material, that is a material having a spontaneous polarization, such as for example lithium niobate, the regions having electro-optic coefficients of opposite sign are regions having mutually oppositely oriented ferroelectric domains.

The substrate material may also be an x-cut substrate of ferroelectric material, particularly lithium niobate. In this case, the provision of opposite oriented ferroelectric domains allows to form a push-pull modulator by placing one hot electrode and one ground electrode.

According to a second aspect of the invention, an electro-optical modulator is provided comprising the coplanar integrated optical waveguide electro-optical modulator according to the first aspect of the invention, and an electrical drive element adapted for supplying to the electrode system a unipolar drive potential.

According to still another aspect of the invention, a transmission station for an optical communication system is provided, comprising at least an optical beam generation means for generating an optical beam and an electro-optical modulator according to the second aspect of the invention.

The features and advantages of the invention will be made apparent by the following detailed description of some embodiments thereof, provided merely by way of non-limiting example and illustrated in the annexed drawings, wherein:
Figure 1 is a schematic top-plan view of a conventional coplanar waveguide integrated electro-optic modulator;
Figure 2 is a cross-section of the modulator of Figure 1 taken along line II-II;
Figure 3 is a schematic top-plan view of a conventional double coplanar strip integrated electro-optic modulator;
Figure 4 is a cross-section of the modulator of Figure 3 taken along line IV-IV;
Figure 5 is a schematic top-plan view of a chirp-free coplanar waveguide integrated electro-optic modulator according to one embodiment of the invention;
Figure 6 is a cross-section of the modulator of Figure 5 taken along line VI-VI;
Figure 7 shows, in cross-sectional view similar to that of Figure 6, a chirp-free coplanar waveguide integrated electro-optic modulator according to another embodiment of the invention;
Figure 8 is a schematic top-plan view of a double coplanar strip integrated electro-optic modulator according to still another embodiment of the invention, allowing a single-drive operability;
Figure 9 is a cross-section of the modulator of Figure 7 taken along line IX-IX;
Figure 10 is a simplified, schematic block diagram of a transmission station of an optical communication system including the coplanar waveguide modulator of Figures 5 or 7 or the double coplanar strip modulator of Figure 8;
Figure 11 shows, in schematic top-plan view, a double coplanar strip integrated modulator with an alternative electrode arrangement;
Figure 12 is a simplified, schematic block diagram of a transmission station of an optical communication system including the double coplanar strip modulator of Figure 11;
Figure 13 is a schematic top-plan view of a coplanar modulator according to a further embodiment of the invention; and
Figure 14 is a cross-section of the modulator of Figure 13 taken along line XIV-XIV.

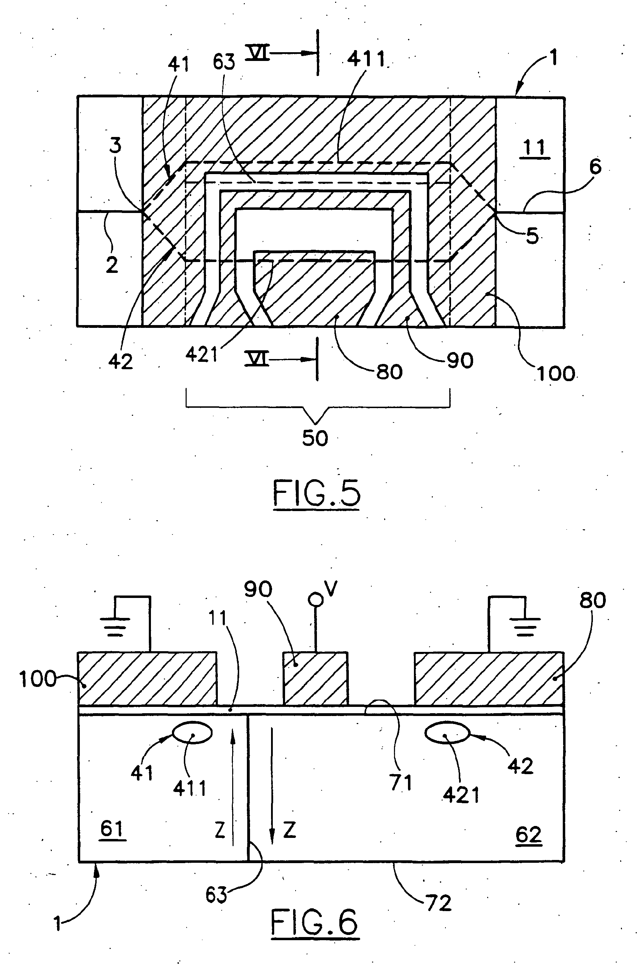

In the drawings, the reference numerals already adopted to identify parts of the prior-art structures of Figures 1 to 4 are also used in Figures 5 to 12 to identify similar or corresponding parts.

In Figures 5 and 6 a first embodiment of the invention is shown, specifically a coplanar waveguide (CPW) Mach-Zehnder integrated electro-optical modulator. The substrate **1** is of z-cut electro-optic material, for example an inorganic crystal such as LiNbO₃, LiTaO₃, KTP or a non-centrosymmetric polymer which can be poled, a poled glass, a semiconductor.

The substrate **1** includes, at least in a device modulation region **50** intended for the interaction between optical fields and electric fields, at least two regions **61**, **62** having electro-optical coefficients of opposite sign, for example, in the case the substrate is a ferroelectric material having a spontaneous polarization, two ferroelectric domain regions **61, 62** with mutually inverted ferroelectric domains, that is mutually inversely poled. In other words, in one region, e.g. region **61**, the ferroelectric domain, and thus the z crystal axis, has an orientation opposite to the orientation of the ferroelectric domain, and thus of the z crystal axis, in the other region **62**. In the drawing this is schematically shown by means of a different, opposite orientation of the z crystal axis in the two regions: towards the top surface **71** of the substrate in region **61**, towards the bottom surface **72** of the substrate in region **62**. For example, the ferroelectric domain of region **62** has the same orientation as the ferroelectric domain of the remaining of the substrate **1**, and the ferroelectric domain of region **61** is inverted with respect to the ferroelectric domain of the remaining of the substrate **1**.

In each ferroelectric domain region **61, 62** a respective one of the two optical waveguides **41, 42** is formed, and the ferroelectric domain regions extend in the modulation region 50 longitudinally to the waveguides **41, 42.** A boundary **63** between the two ferroelectric domain regions **61, 62** is located in an intermediate position between the two waveguides **41, 42.**

In the modulation region **50** metal electrodes **80, 90** and **100,** preferably made of gold, are superimposed over the top surface **71** of the substrate **1** with interposition of the buffer layer **11.** The buffer layer **11** can be, for example, a layer of silicon dioxide or, preferably, a layer of benzo-cyclo-buthene (BCB) which has a slightly lower dielectric constant than silicon dioxide and consequently ensures a better phase matching between the optical modes and the modulating electric field, and lower losses especially in the case of a modulating electric field in the microwave spectrum range.

In particular, a first electrode **80** is superimposed over the waveguide **42** and extends for a section **421** thereof, a second metal electrode **100** is superimposed over the waveguide **41** and extends for a section **411** thereof substantially corresponding to the section **421** of waveguide **42,** and a third metal electrode **90** is superimposed over a portion of the ferroelectric domain region **62** in between the two waveguides **41, 42.**

The electrodes **80** and **100** are intended to be electrically connected to a reference potential (ground), and act therefore as ground electrodes. The electrode **90** is intended to be electrically connected to a modulating potential **V,** and therefore acts as a hot electrode. The layout of the electrodes is properly designed so as to allow the operation of the device up to the microwave region of the spectrum of modulating electric field.

Each ferroelectric domain region has to be sufficiently large (in the direction transversal to the waveguides) to include the waveguide of one of the two interferometric modulator arms. Preferably the ferroelectric domain regions cover the whole transverse profile of the optical mode propagating through the respective waveguide. As far as the thickness of the ferroelectric domain regions is concerned, the deeper the inverted region from the waveguide surface, the greater the overlap of the change of refractive index with the optical mode, i.e. the effective refractive index change seen by the optical mode.

In order to modulate the optical signal entering the modulator, the electrodes **80, 90** and **100** are electrically connected to a time-variable voltage source, so that a modulating electric field is applied to the electrodes **80, 90** and **100.**

Albeit the direction and orientation of the modulating electric field is the same in the two waveguides **41, 42,** the fact that the latter are formed in regions having mutually inverted ferroelectric domain orientations along the z axis causes the refractive index of the two waveguides **41, 42** to undergo opposite changes and the optical signals propagating along such waveguides correspondingly undergo opposite phase shifts. Thus the device has a push-pull configuration.

In fact, the domain inversion alters the non-linear properties of the substrate material, leaving unchanged the linear dielectric properties. In other words, the dielectric constants at all frequencies, including the microwave and optical regimes, when no external field is applied, are the same in differently oriented ferroelectric domains. If the geometry is such that an external modulating field is present across the boundary between the mutually inverted ferroelectric domain regions, an opposite-sign refractive index change is established in the two mutually inverted ferroelectric domain regions, but still this change is not high enough to cause any significant loss by reflection and/or scattering in a waveguide extending across the boundary.

Since in the devices described in this application there may be two domain boundaries only that the mode has to cross while propagating along one of the arms of the Mach-Zehnder, reflection and/or scattering losses are a *fortiori* low.

Differently from the conventional CPW modulator of Figures 1 and 2, wherein the whole substrate **1** forms a single ferroelectric domain with a unique orientation, the modulator of Figures 5 and 6 allows a chirp-free operation, since in the modulation region **50** the structure thereof (as far as the optical waveguides and the electrodes are concerned) is symmetric. This is a significant advantage over the conventional modulator structure.

In the modulator of Figures 5 and 6 the optical waveguides **41** and **42** are both located under the ground electrodes **80** and **100.** The overlap between the optical mode propagating through the waveguides and the modulation electric field is thus expressed by means of the overlap factor Γg. The overlap between the optical mode propagating through a waveguide located under the ground electrode and the modulation electric field is lower than that achievable by locating the waveguide under the hot electrode: in this latter case, the overlap is expressed by an overlap factor Γh approximately six times higher than Γg.

A lower overlap between the optical mode propagating through the waveguides and the modulation electric field means that a higher drive voltage is required to produce a similar electro-optic modulation of the waveguide refractive index. As a consequence, in the modulator of Figures 5 and 6 an increase of about a factor 3.5 in the drive voltage with respect to the single-domain CPW modulator of Figures 1 and 2 is required to achieve a similar refractive index modulation effect.

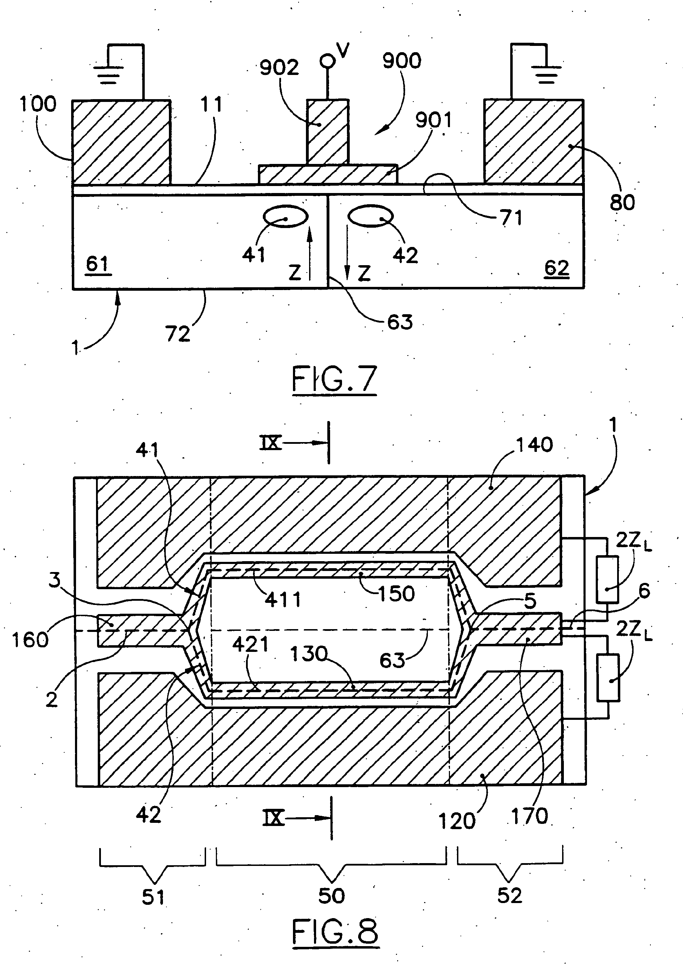

The coplanar waveguide modulator of Figure 7 allows to reduce the drive voltage necessary to produce a given refractive index modulation with respect to the modulator of Figures 5 and 6, while preserving the chirp-free operation. Both the waveguides **41, 42** are located under a hot electrode **900** and the boundary **63** between the two ferroelectric domain regions **61, 62** is consequently positioned under the hot electrode **900.** By means of this arrangement the overlap between the optical modes propagating through the waveguides and the modulation electric field is higher than that achievable by the structure of Figures 5 and 6, and even higher than that achievable in the conventional coplanar waveguide modulator of Figures 1 and 2. The drive voltage can thus be lower than that required by the modulator of Figures 5 and 6 and, at least in principle, even lower than that required by the conventional coplanar waveguide modulator of Figures 1 and 2. At the same time, the chirp-free operation is preserved, being the structure still symmetrical.

In the embodiment of Figure 7, compared to that of Figures 5 and 6, the waveguides **41, 42** are closer to each other. However, the distance between the waveguides **41** and **42** has to be kept sufficiently large so as to avoid optical coupling between the two waveguides and thus to avoid any mutual exchange of wave energy between the waveguides. The hot electrode **900** under which both the waveguides are to be located has therefore to be sufficiently wide. A hot electrode width of at least 30 µm is suitable to allow a waveguide separation large enough to avoid optical coupling and thus mutual exchange of wave energy between the waveguides **41** and **42.**

A wide hot electrode has a low impedance. In order to keep the impedance high, the hot electrode **900** should be carefully designed so to have a particular shape, such as the so-called inverted "T" shape depicted in Figure 7, with a plate **901** disposed above the buffer layer **11** at least 30 µm wide, and a narrower stem **902** on the top of the plate **901.** However, even with such a design, velocity matching electro-optic response in a band of 20 GHz can be achieved only when the input impedance of the modulator is approximately 25 Ω. This is a too low impedance value for practical applications, thus the structure of Figure 7 can be used with a band up to 10 GHz, so that a modulator input impedance higher than 30 Ω can be achieved. This frequency bandwidth limit has been calculated assuming a V_{π}·L product of 13 Vcm, where V_{π} is the drive voltage and L is the length of the modulation region.

It is to be observed that in the modulator of Figure 7 at least one ground electrode is necessary, even if the provision of two hot electrodes as shown in the drawing enhances the symmetry of the structure.

Figures 8. and 9 show another embodiment of the invention, specifically a double coplanar strip (CPS) Mach-Zehnder integrated electro-optical modulator. As in the previous embodiments, the substrate **1** is of z-cut electro-optic material, for example an inorganic crystal such as LiNbO₃, LiTaO₃, KTP or non-centrosymmetric polymers which can be poled, poled glass, semiconductors, and includes, at least in a device modulation region **50,** at least two regions **61, 62** having electro-optic coefficients of opposite sign, for example ferroelectric domain regions **61, 62** with mutually inverted ferroelectric domain orientations.

In each ferroelectric domain region **61, 62** a respective one of the two optical waveguides **41, 42** is formed, and the ferroelectric domain regions extend in the modulation region **50** longitudinally to the waveguides **41, 42.** A boundary **63** between the two ferroelectric domain regions **61, 62** is positioned in an intermediate position between the two waveguides **41, 42,** for example midway between the two waveguides **41, 42,** so that the ferroelectric domain inversion comprises one of the two arms, in the modulation region **50,** that is in the region where the optical mode interact with the modulating electric field.

The modulator comprises an arrangement of metal electrodes comprising two electrodes **130** and **150,** intended to act as hot electrodes, which are superimposed over the waveguides **42** and **41,** respectively, and extend for respective sections **421** and **411** thereof in the modulation region **50.** The electrodes **130** and **150** additionally extend over the respective waveguides **42** and **41** also outside the modulation region **50,** respectively in an upstream region **51** and a downstream region **52,** and merge together in correspondence of the Y-junctions **3** and **4** to form electrode extensions **160, 170** superimposed over the input waveguide **2** and output waveguide **6,** respectively. Electrodes **120** and **140,** intended to act as ground electrodes, are substantially co-extensively arranged aside the electrodes **130** and **150,** respectively, and the electrodes **160** and **170.**

The fact that the waveguides **41, 42** are located under the hot electrodes **130, 150** increases the overlap between the optical modes propagating through the waveguides and the modulating electric field, and thus helps to reduce the driving voltage. Additionally, the structure is symmetric, so that a chirp-free operation is assured.

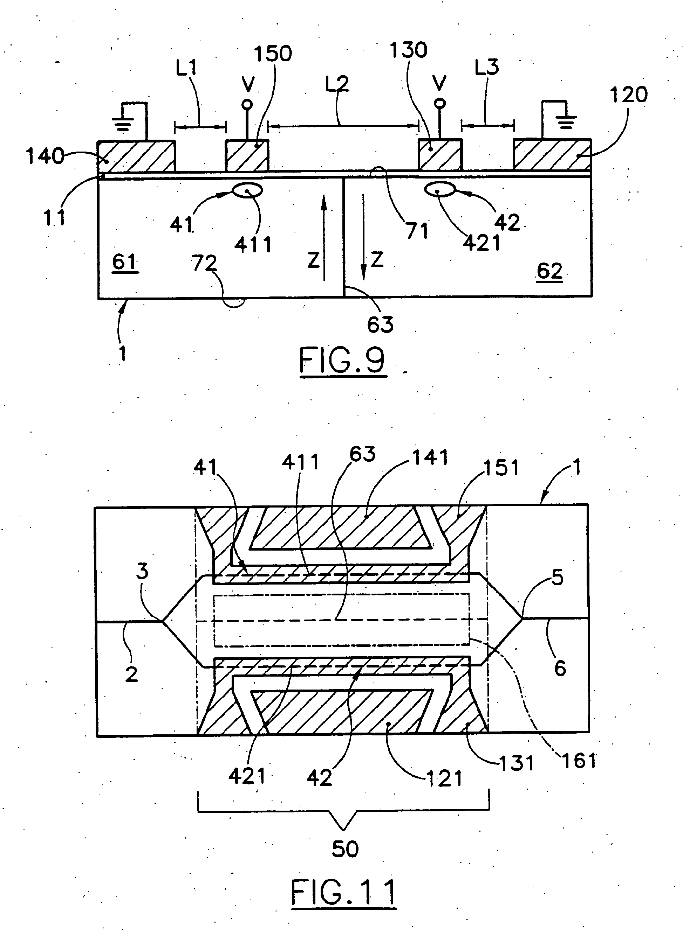

Differently from the conventional double CPS modulator depicted in Figure 3 which, in order to achieve a push-pull operation, needs a dual voltage drive **(+V, -V),** in the double CPS modulator of Figures 8 and 9 the formation of the two waveguides **41, 42** in the two mutually inverted ferroelectric domain regions **61, 62** has the advantage of allowing a single-drive operation. Mutually opposite refractive index modulation in the two waveguides **41, 42,** and thus mutually opposite phase shifts of the optical modes propagating therethrough, can in fact be achieved by applying a same drive voltage **V** to the two hot electrodes **13** and **15,** thanks to the fact that the ferroelectric domains in the two regions **61, 62** have mutually opposed orientations.

In the electrode arrangement of Figure 8, in addition to a double CPS region in correspondence of the modulation region **50** of the device (where the optical modes propagating through the waveguides interact with the modulating electric field), two CPW regions exist, respectively input and output CPW regions, in the upstream **51** and downstream **52** regions, with adiabatic transitions between the input and output CPW regions and the double CPS region.

The input and output CPW electrodes can be designed in such a way that their impedances are equal to Zo/2, where Zo is the impedance of each CPS section of the double CPS structure. Although the input and output impedance of the modulator would be exactly Zo/2 if each of the strips **130, 150** were independently grounded at the output through an impedance Zo, in practice also in the structure of Figure 8 the input and output impedance can be considered approximately equal to Zo/2. To prevent electrical reflection at the output, it is preferable to connect the CPW output section with a total load Z_{L} approximately equal to Zo/2. In order to guarantee the symmetry of the structure for the modulating microwave, two microwave loads **2Z_{L},** each of value 2Z_{L}, are preferably connected between the extension 170 and the ground electrodes **120** and **140,** respectively.

The electrode arrangement of Figure 8 allows to form an integrated power splitter for the modulating microwave.

It is pointed out that although in Figure 8 only the modulation section of the electrode arrangement is depicted, those skilled in the art will readily understand that additional electrode sections can be provided, for example the bias electrode section intended to insure that the device working point is properly selected. In this respect, it is worth noting that the biasing of the device can be achieved with a single electrode extending over both the waveguides, provided that the latter are formed in substrate regions having electro-optic coefficients of opposite sign.

Possible dimensions for the CPS region **50** are schematically indicated in Figure 9. Reference numerals **L1** and **L3** are used to indicate the dimension of the gaps between the hot electrodes **130** and **150** and the contiguous ground electrodes **120** and **140,** while reference numeral **L2** designates the gap between the two hot electrodes **130** and **150.** A suitable value for **L1** is in the range 6 to 20 µm, for example 20 µm; for symmetry of the structure, substantially equal values apply to dimension **L3.** A suitable value for dimension **L2** is equal to or more than 100 µm, to prevent any electrical coupling between the two adjacent coplanar strips **120, 130** and **140, 150.** The buffer layer **11** is preferably made of benzo-cyclo-buthene (BCB) and has a thickness in the range 0.7 to 1.8 µm. The electrodes **120, 130, 140, 150** are preferably made of gold and have a thickness in the range 15 to 25 µm and the width of the hot electrodes **130** and **150** is in the range 5 to 14 µm.

The Applicant has observed that the structure proposed by the already cited JP 07-191352 in connection with an optical waveguide device in which a mutual exchange of wave energy between the waveguides takes place, with electrodes which are not coplanar but instead arranged in the upper and lower surfaces of the crystal substrate, is not suitable for realizing Mach-Zehnder modulators intended to operate at relatively high modulation frequencies. In electro-optical modulators both the drive voltage (also referred to as V_{π}) and the bandwidth (BW) are inversely proportional to the modulator length (the length L of the modulation region of the modulator). However, while on one hand it is desirable to have high modulator lengths, so to reduce the drive voltage, on the other hand the modulator length should be kept small so to achieve higher bandwidths. Stated in terms of the products V_{π}·L and BW·L, a good electro-optical modulator should be characterised by a small V_{π}·L and a high BW·L. Let it be assumed that the structure proposed in JP 07-191352 is adopted for realizing a Mach-Zehnder modulator, and that a modulator length L of approximately 3 cm is chosen so that the drive voltage is kept approximately equal to 5V. The Applicant has observed that in these conditions it is difficult to achieve bandwidths of approximately 5 GHz, due to the fact that the modulating microwave propagates substantially through the substrate and sees a refractive index substantially different from the refractive index seen by the optical mode. This is a consequence of the arrangement of the flat-plate positive and negative electrodes in the upper and lower surfaces of the crystal substrate.

By way of comparison, the Applicant has conducted simulations on the structure of Figure 9 adopting the following values for the geometrical parameters:
hot electrode width: 7.5 µm;
L1 = L3 = 20 µm;
L2 = 150 µm;
electrode thickness: 18 µm;
BCB layer thickness: 1.5 µm.

The drive voltage swing V_{π} can be estimated to be approximately 4.2 V for an active CPS region **50** having approximately a length L of about 31 mm, giving a product V_{π}·L. of approximately 13 V·cm.

As a result of the simulations, the Applicant has found that quasi-perfect phase-matching between the optical guided mode and the modulating microwave in each of the strips **130** and **150** is ensured, the refractive index seen by the modulating microwave being close to the refractive index seen by the optical mode (approximately equal to 2.14) for most of the frequency range of interest, from approximately 10 to approximately 40 GHz. The electro-optical response as a function of the modulation frequency shows a 3 dB bandwidth of the order of 40 GHz.

One reason for this is that in the structures of the present invention, having a coplanar electrode arrangement, the modulating microwave propagates also through the buffer layer **11,** so that the average refractive index seen by the microwave is quite close to the refractive index seen by the optical mode.

The same structure also ensures that the impedance of each strip (Zo) remains above 60 Ω. The resulting input modulator impedance is thus above 30 Ω, which matches to the typical 50 Ω source impedance without introducing too high input microwave reflection loss. The microwave loss is also kept low thanks to the use of the BCB buffer layer 11.

A lower V_{π}·L product can be achieved if the hot electrode width is increased to values comparable or greater than the optical mode dimension (typically the 1/e² intensity width is 10 µm). However this has the drawback of producing a worse phase-matching.

The calculated electrical return loss for the proposed configuration results to be largely below the -10dB level. Simulations show that the electro-optical response and electrical return loss have ripples. These ripples could be reduced by a better impedance matching of each of the CPS strips with the ground electrode. This could be achieved by grounding independently the two CPS strips with impedances Zo (i.e. equal to each CPS impedance). As mentioned above, this electrode configuration would also ensure that the input modulator impedance is Zo/2.

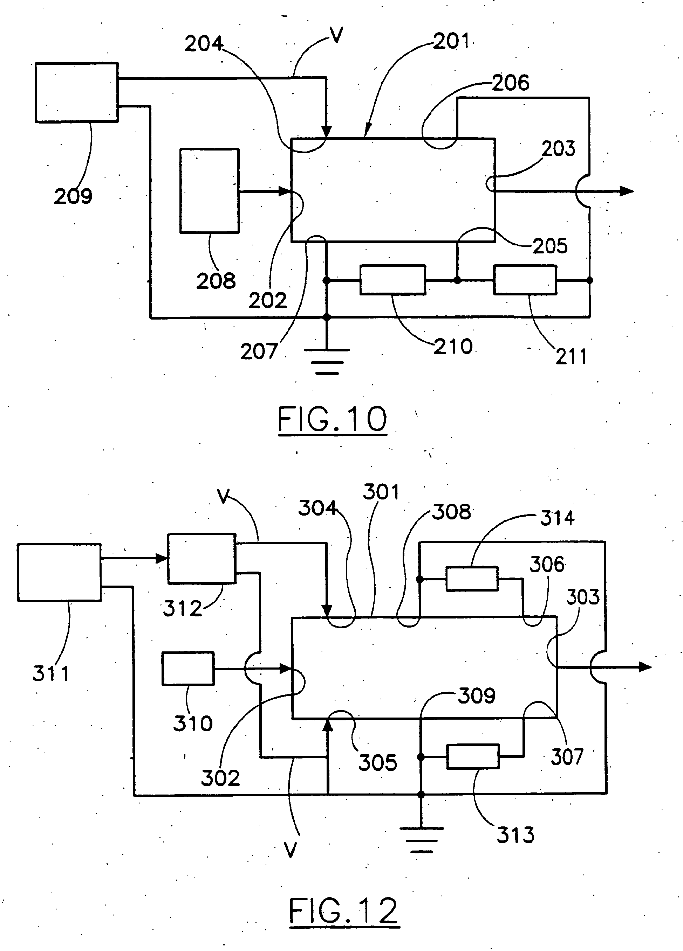

Figure 10 shows, in terms of a simplified schematic block diagram, a transmission station for an optical communication system including a modulator **201** according to any one of the embodiments shown in Figures 5 to 9. The modulator **201** has an-optical input **202,** receiving an optical beam for example generated by a laser source **208,** and an optical output **203** for an intensity-modulated optical beam. The modulator **201** further comprises an electrical input **204,** for receiving a modulating potential **V** from a driver **209,** an electrical output **205,** and two electrical ground terminals **206, 207** to be connected to a reference potential. For impedance matching, the electrical output **205** is coupled to the reference potential by means of suitable loads **210, 211.** The modulator, both in the CPW configurations of Figures 5 and 7 and in the double CPS configuration of Figure 8, allows a single drive operability.

Figure 11 shows, in top-plan view, a double coplanar strip modulator according to still another embodiment of the invention. Differently from the modulator of Figure 8, the modulator comprises an arrangement of metal electrodes **12, 13, 14** and **15** structurally similar to that of the conventional double CPS modulator depicted in Figure 3, with two ground electrodes **12, 14** and two hot electrodes **13, 15** superimposed over the waveguides **42** and **41,** respectively, and extending for respective sections **421, 411** thereof.

The double coplanar strip modulator of Figure 11 still allows a single drive operability (the hot electrodes 13 and **15** are both supplied with a same polarity modulating potential), but differently from the embodiment of Figure 8 it does not include an integrated power splitter for the modulating microwave. This is depicted in Figure 12, which shows in terms of a simplified, schematic block diagram a possible use of the modulator **(301** in the drawing) in a transmission station of an optical communication system. The modulator **301** has an optical input **302,** receiving an optical beam for example generated by a laser source **310,** and an optical output **303** for an intensity-modulated optical beam. The modulator **301** further comprises two electrical inputs **304** and **305,** for receiving a same polarity modulating potential **V** from a driver **311** through a power splitter **312**, two electrical outputs **306** and **307,** and two electrical ground terminals **308, 309** to be connected to a reference potential. For impedance matching, the electrical outputs **306, 307** are coupled to the reference potential by means of suitable loads **313, 314.**

It is to be observed that in the double CPS modulator of Figure11, a central ground electrode 16 could be provided (as in the prior art device of Figures 3 and 4), so as to make the structure more symmetric from the viewpoint of the modulating electric field distribution in the waveguides. In this case, the device becomes a double CPW modulator.

The coplanar integrated optical waveguide electro-optical modulator of the invention can be manufactured starting from a conventional z-cut slice of an electro-optic material, such as LiNbO₃. The integrated optical waveguides can be formed by means of any known technique, for example by selectively doping the substrate with titanium ions. Selective doping can be achieved using known photolithographic techniques and subsequent thermal diffusion processes.

Concerning the method of formation of the mutually opposed ferroelectric domain regions **61** and **62,** various techniques of domain inversion have already been reported which allow to fabricate LiNbO₃ crystals including regions of different polarity, thus presenting reversal of those properties which are dependent on the direction and orientation of the z crystal axis.

Some methods for achieving ferroelectric domain inversion rely on the diffusion of ions at high temperature, close to the crystal Curie point.

As reported for example in N. Ohnishi, 'An etching study on a heat-induced layer at the positive-domain surface of LiNbO3', Jap. J. Appl. Phys., vol.16, p.1069 (1977), Li₂O outdiffusion at the z+ face of a LiNbO₃ crystal heated between 800-1100 °C for 1 to 20 hours can induce domain inversion.

In S. Miyazawa, 'Ferroelectric domain inversion in Ti-diffused LiNbO3 optical waveguide', J. Appl. Phys., vol.50, p. 4599 (1979) it is reported that Ti-indiffusion, carried out at 950-1100 °C in air for 5 to 10 hours, can produce ferroelectric domain inversion on the z+ face.

K. Nakamura and H. Shimizu, 'Ferroelectric inversion layers formed by heat treatment of proton-exchanged LiTaO3', Appl. Phys. Lett., vol. 56, p. 1535 (1990) reported that proton exchange followed by heat treatment close to the Curie temperature allowed ferroelectric domain inversion on the z+ face of LiNbO₃.

Cladding of SiO₂ followed by a heat treatment near the Curie temperature for several hours has also been used to stimulate Li₂O outdiffusion in LiNbO₃, as reported in M. Fujimura et al. 'Ferroelectric-domain inversion induced by SiO2 cladding for LiNbO3 waveguide SHG', Electronics Lett., vol. 27, p.1207 (1991), and ferroelectric domain inversion occurs on the z+ face under the coated area.

In L. Huang and N.A.F. Jaeger, 'Discussion of domain inversion in LiNbO3', Appl. Phys. Lett., vol. 65, p. 1763 (1994) a simple model has been proposed in which ferroelectric domain inversion is associated to the space-charge field of a few hundred volts per centimetre resulting from NbLi defects and free electrons, which are produced by Li₂O outdiffusion at high temperature.

Another method to achieve ferroelectric domain inversion in LiNbO₃ and LiTaO₃, discussed for example in P.W. Haycock and P.D. Townsend, 'A method of poling LiNbO3 and LiTaO3 below Tc', Appl. Phys. Lett., vol. 48, p. 698 (1986), is based on the use of an electron beam. The first attempts were carried out at temperatures of about 600 °C (LiNbO₃) using small electric-fields of the order of 10 V/cm. The idea was that the oxygen ions combine in a molecular state smaller than the original single-ion state, making easier for the lithium ions to cross to the other side of the oxygen plane.

Any of the known ferroelectric domain inversion or poling techniques could in principle be used to form the ferroelectric domain regions **61, 62.**

However, the regions of ferroelectric domain inversion obtained by diffusion of ions at high temperature are usually shallow (to a few microns depth below the surface), thus suitable only for waveguide applications. In addition they can suffer from the fact that the domain shape is triangular (Ti indiffusion, Li₂O outdiffusion, SiO₂ cladding) or semicircular (proton exchange followed by heat treatment) giving sometimes a non-optimised overlap between the inverted region and the waveguide modes. The electron-beam irradiation technique can produce straight domains over the whole sample thickness (0.1 - 1 mm), giving the potential for improving the aforesaid overlap.

Other methods have been used to obtain ferroelectric domain inversion, including doping during Czochralski growth and laser heated pedestal crystal growth.

The most efficient poled devices to date have been obtained using the technique of electric field poling at room temperature, as discussed for example in M. Yamada et al., 'First-order quasi-phase-matched LiNbO3 waveguide periodically poled by applying an external field for efficient blue second-harmonic generation', Appl. Phys. Lett., vol. 62, p. 435 (1993). High voltage pulses are applied to the z-cut substrate, so that the external electric fields are above the coercive field value (about 20 kV/mm for LiNbO₃), corresponding to which domain inversion occurs. The electric field poling technique allows to obtain straight domains over the whole thickness with a high degree of resolution (a few microns, as it has been shown by the periods fabricated for some quasi-phase-matched frequency conversion processes). In addition it is simpler and cheaper compared to the other methods.

In the context of the present invention, the regions having electro-optic coefficients of opposite sign, for example the ferroelectric domain regions in ferroelectric material substrates, have to be sufficiently large, transversally to the waveguides, so to include the waveguides of the two modulator arms. Preferably, the regions having electro-optic coefficients of opposite sign or the ferroelectric domain regions should extend to cover the whole transverse profile of the optical modes propagating through the waveguide.

The extension of the ferroelectric domain regions in the plane of the modulator *(i.e.* on the surface **71** of the substrate **1)** can be defined with sub-micron resolution using lithographic techniques for the formation of the electrodes through which the poling voltage is applied.

As far as the thickness of inverted region is concerned, it is not essential that the ferroelectric domain regions **61, 62** extend to the bottom surface **72** of the substrate **1**. However, the deeper the inverted region from the waveguide surface the greater the overlap with the optical mode. From this viewpoint, among all the possible poling techniques, electric field poling techniques are preferable.

The ferroelectric domain regions **61, 62** can be formed before or after the formation of the waveguides **2, 41, 42, 6** in the substrate **1**.

Albeit in the detailed description so far provided the regions having electro-optical coefficients of opposite sign extended for the whole device modulation region, this is not to be intended as limitative to the invention. The ferroelectric domain regions could actually extend for only a portion of the modulation region.

Additionally, instead of only two regions having electro-optic coefficients of opposite sign, two successions of regions having alternated sign electro-optic coefficients could be provided, wherein each succession is passed through by a respective one of the two waveguides forming the modulator arms and pairs of regions in the two succession, contiguous in the direction transversal to the waveguides, have electro-optic coefficients of mutually opposite sign. In this way, phase velocity mismatches between the modulation electric field and the optical modulation of the optical modes propagating through the waveguides can be compensated.

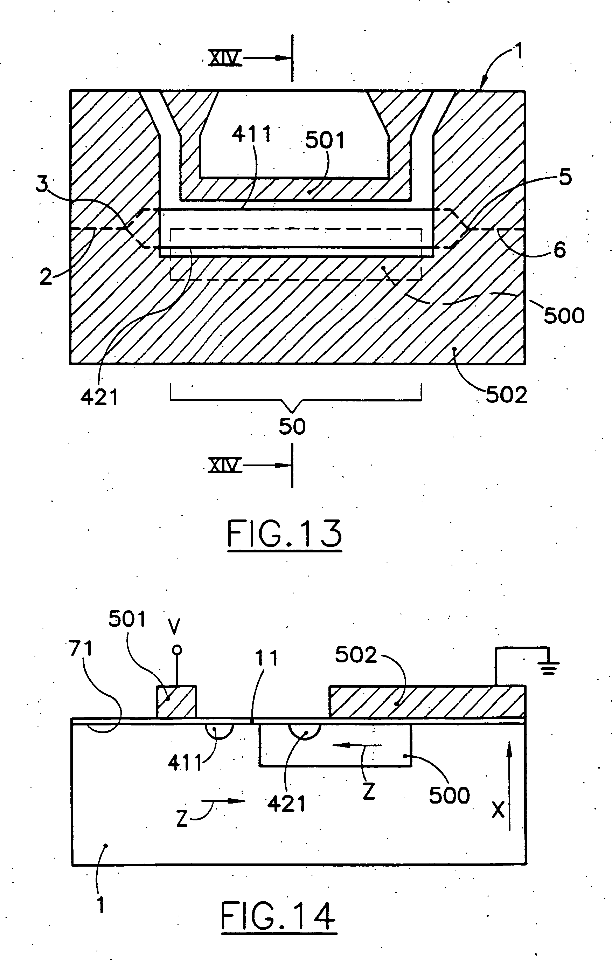

It is important to note that the present invention not only applies to modulators formed in z-cut substrates, as those described up to now ion the present description. By way of example only, Figures 13 and 14 schematically show, respectively in top-plan and cross-sectional views, an embodiment of the invention in which a coplanar Mach-Zehnder modulator is formed in an x-cut substrate 1, that is, a substrate having the major surfaces perpendicular to the x crystal axis.

At least in a device modulation region 50, the two waveguides **411** and **421** constituting the interferometer arms are formed in substrate regions having electro-optic coefficients r₃₃ of opposite sign (as previously mentioned, r₃₃ is the electro-optic coefficient relating the refractive index change experienced by electromagnetic waves polarised along the z crystal axis to the component of the modulating electric field along the same axis). For example, assuming that the substrate is of a ferroelectric material such as lithium niobate, the waveguide **411** is formed directly in the substrate, supposed to have spontaneous polarization (and thus z crystal axis) oriented towards the right of the drawing, while the waveguide **421** is formed in a substrate region **500** in which the spontaneous polarization orientation has been reversed. A possible technique for inverting the orientation of spontaneous polarization in lithium niobate substrates is reported in Kishino et al., "70+ µm deep domain inversion in X-cut LiNbO3 and its use in a high-speed bandpass integrated-optic modulator", Appl. Phys. Lett., Vol. 76, No. 26, pages 3852-3854.

An electrode arrangement is provided over the top major surface **71** of the substrate in correspondence of which the waveguides are integrated, with interposition of the buffer layer **11.** The electrode arrangement includes a hot electrode **501** extending aside the waveguide **411** on the opposite side of the waveguide **421,** and a ground electrode **502** extending aside the waveguide **421** on the opposite side of the waveguide **411.**

The z component of the electric field generated in consequence to the application of a modulating potential **V** to the hot electrode **501** has a same direction and orientation in the two waveguides **411, 421.** However, since the waveguides are formed in substrate regions having opposite-sign electro-optical coefficients, the refractive index of the two waveguides undergoes opposite changes, thus achieving a push-pull effect.

The coplanar integrated optical waveguide electro-optical modulator according to the present invention is particularly adapted to high data rate digital optical communications.

## Claims

1. Coplanar integrated optical waveguide electro-optical modulator, comprising:
- a substrate (**1**) of an electro-optic material;
- at least two optical waveguides (**41,42**) integrated in the substrate in correspondence of a surface (**71**) thereof, and
- an electrode system (**80,90,100;80,90,900;12-15;12-16;120,130,140,150,160,170;501,502**) arranged on said surface for applying a modulating electric field to the waveguides suitable for causing a modulation of a refractive index of the two waveguides in a device modulation region (**50**),
**characterised in that**
the waveguides are formed, for at least a section thereof (**411,421**) in the device modulation region, in substrate regions (**61,62;1,500**) that comprise successions of at least two substrate regions having electro-optic coefficients with alternated sign, each succession being passed through by a respective one of the at least two waveguides, wherein pairs of regions in the successions that are substantially aligned in the direction transversal to the waveguides have electro-optic coefficients of mutually opposite sign, so that a modulating electric field of same direction and orientation in the waveguide sections causes refractive index modulations of opposite sign in the waveguide sections.

2. The coplanar integrated optical waveguide electro-optical modulator of claim 1, in which said waveguide sections and the respective substrate regions having electro-optic coefficients of opposite sign extend substantially for the whole device modulation region.

3. The coplanar integrated optical waveguide electro-optical modulator of claim 2, in which said electrode system comprises at least two ground electrodes (**80,100**) each one extending over said section of a respective waveguide, and at least a hot electrode (**90**) extending between the ground electrodes, so as to form a coplanar waveguide electrode system.

4. The coplanar integrated optical waveguide electro-optical modulator of claim 2, in which said electrode system comprises one hot electrode (**900**) extending over said sections of the waveguides, and at least one ground electrode (**80,100**) extending at the side of the hot electrode.

5. The coplanar integrated optical waveguide electro-optical modulator of claim 4, in which the waveguides are spaced apart of a distance suitable to substantially prevent optical coupling therebetween in the modulation region, the hot electrode comprising a wider portion (**901**) having a width equal to or higher than said distance, and a narrower portion (**902**) on the top of the wider portion.

6. The coplanar integrated optical waveguide electro-optical modulator of claim 2, in which said electrode system comprises two hot electrodes (**13,15;130,150**), each one extending over said section of a respective waveguide, for receiving a same modulating voltage (V), and at least one ground electrode (**12,14;120,140**) extending aside the hot electrodes, so as to form a double coplanar strip electrode system.

7. The coplanar integrated optical waveguide electro-optical modulator of claim 6, in which the at least one ground electrode comprises two ground electrodes, each one extending aside a respective hot electrode on an side thereof opposite to the other hot electrode.

8. The coplanar integrated optical waveguide electro-optical modulator of claim 7, in which said electrode system comprises an integrated power splitter (**160,130,150**) for receiving an externally-generated modulating voltage (**V**) and supplying it to the two hot electrodes.

9. The coplanar integrated optical waveguide electro-optical modulator of claim 8, in which outside said modulation region the waveguides are optically connected by means of respective Y-junctions (**3,5**) to an input waveguide (**2**) and an output waveguide (**6**), the two hot electrodes merging together at said Y-junctions and having extensions (**160,170**) over the input and output waveguides.

10. The coplanar integrated optical waveguide electro-optical modulator of claim 9, in which the ground electrodes extend aside said extensions so as to form, in correspondence of the input and output waveguides, coplanar waveguide electrode systems.

11. The coplanar integrated optical waveguide electro-optical modulator of any one of the preceding claims, in which the substrate of electro-optic material is a z-cut substrate of ferroelectric material, particularly lithium niobate, the regions having electro-optic coefficients of opposite sign being regions having mutually oppositely oriented ferroelectric domains.

12. The coplanar integrated electro-optical modulator according to claim 1, in which the substrate of electro-optic material is an x-cut substrate of ferroelectric material, particularly lithium niobate, the regions having electro-optic coefficients of opposite sign being regions having mutually oppositely oriented ferroelectric domains, said electrode system comprising a hot electrode and a ground electrode.

13. An electro-optical modulator comprising a coplanar integrated optical waveguide electro-optical modulator (**201;301**) according to anyone of the preceding claims, and an electrical drive element (**209;311,312**) adapted for supplying to the electrode system a unipolar drive potential (**V**).

14. A transmission station for an optical communication system, comprising at least an optical beam generation means (208;310) for generating an optical beam and an electro-optical modulator according to claim 13.

## Patentansprüche

1. Koplanarer elektrooptischer Modulator mit integriertem optischem Wellenleiter, der aufweist:
- ein Substrat (1) aus einem elektrooptischen Material,
- wenigstens zwei optische Wellenleiter (41, 42), die einer Oberfläche (71) zugeordnet in dem Substrat integriert sind, und
- ein Elektrodensystem (80, 90, 100; 80, 90, 900; 12-15; 12-16; 120, 130, 140, 150, 160, 170; 501, 502), welches auf der Oberfläche angeordnet ist, um ein modulierendes elektrisches Feld an die Wellenleiter anzulegen, welches geeignet ist, eine Modulation eines Brechungsindexes der beiden Wellenleiter in einem Vorrichtungsmodulationsbereich (50) zu bewirken,
**dadurch gekennzeichnet, daß**
die Wellenleiter wenigstens abschnittsweise von diesen (411, 421) in dem Vorrichtungsmodulationsbereich in Substratbereichen (61, 62; 1, 500) ausgebildet sind, die Abfolgen wenigstens zweier Substratbereiche mit elektrooptischen Koeffizienten mit abwechselnden Vorzeichen aufweisen, wobei jede Abfolge von einem entsprechenden der wenigstens zwei Wellenleiter durchlaufen wird, wobei Paare von Bereichen in den Abfolgen, die im wesentlichen in der Richtung quer zu den Wellenleitern ausgerichtet sind, elektrooptische Koeffizienten mit zueinander entgegengesetztem Vorzeichen haben, so daß ein modulierendes elektrisches Feld der gleichen Richtung und Orientierung in den Wellenleiterabschnitten Modulationen des Brechungsindexes mit entgegengesetztem Vorzeichen in den Wellenleiterabschnitten bewirkt.

2. Koplanarer elektrooptischer Modulator mit integriertem optischem Wellenleiter nach Anspruch 1, wobei die Wellenleiterabschnitte und die jeweiligen Substratbereiche mit elektrooptischen Koeffizienten mit entgegengesetztem Vorzeichen sich im wesentlichen über den gesamten Vorrichtungsmodulationsbereich erstrecken.

3. Koplanarer elektrooptischer Modulator mit integriertem optischem Wellenleiter nach Anspruch 2, wobei das Elektrodensystem wenigstens zwei Masseelektroden (80, 100), die sich jeweils über den Abschnitt eines jeweiligen Wellenleiters erstrecken, und wenigstens eine heiße Elektrode (90), die sich zwischen den Masseelektroden erstreckt, aufweist, um so ein Elektrodensystem mit koplanaren Wellenleitern zu bilden.

4. Koplanarer elektrooptischer Modulator mit integriertem optischem Wellenleiter nach Anspruch 2, wobei das Elektrodensystem eine heiße Elektrode (900), die sich über die Abschnitte der Wellenleiter erstreckt, und wenigstens eine Masseelektrode (80, 100), die sich an der Seite der heißen Elektrode erstreckt, aufweist.

5. Koplanarer elektrooptischer Modulator mit integriertem optischem Wellenleiter nach Anspruch 4, wobei die Wellenleiter um einen Abstand voneinander entfernt sind, der geeignet ist, eine optische Kopplung zwischen diesen im Modulationsbereich im wesentlichen zu verhindern, wobei die heiße Elektrode einen breiteren Abschnitt (901) mit einer Breite, die gleich dem Abstand oder größer ist, und einen schmäleren Abschnitt (902) auf dem breiteren Abschnitt aufweist.

6. Koplanarer elektrooptischer Modulator mit integriertem optischem Wellenleiter nach Anspruch 2, wobei das Elektrodensystem zwei heiße Elektroden (13, 15; 130, 150), von denen sich jede über den Abschnitt eines jeweiligen Wellenleiters erstreckt, um die gleiche Modulationsspannung (V) aufzunehmen, und wenigstens eine Masseelektrode (12, 14; 120, 140), die sich neben den heißen Elektroden erstreckt, aufweist, um so ein Elektrodensystem mit doppeltem koplanarem Streifen zu bilden.

7. Koplanarer elektrooptischer Modulator mit integriertem optischem Wellenleiter nach Anspruch 6, wobei die wenigstens eine Masseelektrode zwei Masseelektroden aufweist, von denen jede sich neben einer jeweiligen heißen Elektrode auf einer Seite davon entgegengesetzt zu der anderen heißen Elektrode erstreckt.

8. Koplanarer elektrooptischer Modulator mit integriertem optischem Wellenleiter nach Anspruch 7, wobei das Elektrodensystem einen integrierten Leistungsteiler (160, 130, 150) aufweist, um eine extern erzeugte Modulationsspannung (V) aufzunehmen und sie den beiden heißen Elektroden zuzuführen.

9. Koplanarer elektrooptischer Modulator mit integriertem optischem Wellenleiter nach Anspruch 8, wobei außerhalb des Modulationsbereichs die Wellenleiter mittels jeweiliger Y-Kopplungen (3, 5) optisch mit einem Eingangswellenleiter (2) und einem Ausgangswellenleiter (6) verbunden sind und die beiden heißen Elektroden an den Y-Kopplungen miteinander verschmelzen und Erweiterungen (160, 170) über den Eingangs- und Ausgangswellenleitern haben.

10. Koplanarer elektrooptischer Modulator mit integriertem optischem Wellenleiter nach Anspruch 9, wobei die Masseelektroden sich neben den Erweiterungen erstrecken, um so entsprechend den Eingangs- und Ausgangswellenleitern Elektrodensysteme mit koplanarem Wellenleiter zu bilden.

11. Koplanarer elektrooptischer Modulator mit integriertem optischem Wellenleiter nach einem der vorangegangenen Ansprüche, wobei das Substrat aus elektrooptischem Material ein z-förmiges Substrat aus ferroelektrischem Material, insbesondere Lithiumniobat, ist, wobei die Bereiche mit elektrooptischen Koeffizienten mit entgegengesetztem Vorzeichen Bereiche mit zueinander entgegengesetzt orientierten ferroelektrischen Domänen sind.

12. Koplanarer elektrooptischer Modulator mit integriertem optischem Wellenleiter nach Anspruch 1, wobei das Substrat aus elektrooptischem Material ein x-förmiges Substrat aus ferroelektrischem Material, insbesondere Lithiumniobat, ist, wobei die Bereiche mit elektrooptischen Koeffizienten mit entgegengesetztem Vorzeichen Bereiche mit zueinander entgegengesetzt orientierten ferroelektrischen Domänen sind und das Elektrodensystem eine heiße Elektrode und eine Masseelektrode aufweist.

13. Elektrooptischer Modulator, welcher einen koplanaren elektrooptischen Modulator mit integriertem optischem Wellenleiter (201; 301) nach einem der vorangegangenen Ansprüche und ein elektrisches Steuerelement (209; 311, 312) aufweist, welches dafür ausgelegt ist, dem Elektrodensystem ein unipolares Steuerpotential (V) zuzuführen.

14. Übertragungsstation für ein optisches Kommunikationssystem, welche wenigstens eine Einrichtung (208; 310) zum Erzeugen optischer Strahlen, um einen optischen Strahl zu erzeugen, und einen elektrooptischen Modulator nach Anspruch 13 aufweist.

## Revendications

1. Modulateur électro-optique coplanaire intégré avec guide d'ondes optiques, comprenant :
- un substrat (1) en un matériau électro-optique ;
- au moins deux guides d'ondes optiques (41, 42) intégrés dans le substrat en correspondance avec une surface (71) de celui-ci, et
- un système d'électrodes (80, 90, 100; 80, 90, 900 ; 12-15 ; 12-16 ; 120, 130, 140, 150, 160, 170 ; 501, 502) agencé sur ladite surface pour appliquer un champ électrique de modulation aux guides d'ondes approprié pour provoquer une modulation d'un indice de réfraction des deux guides d'ondes dans une région de modulation de dispositif (50),
**caractérisé en ce que**
les guides d'ondes sont formés, pour au moins une section de ceux-ci (411, 421) dans la région de modulation de dispositif, dans les régions de substrat (61, 62; 1, 500) qui comprennent des successions d'au moins deux régions de substrat ayant des coefficients électro-optiques avec des signes alternés, chaque succession étant traversée par un guide d'ondes respectif parmi lesdits au moins deux guides d'ondes, dans lequel les paires de régions des successions qui sont sensiblement alignées dans la direction transversale aux guides d'ondes ont des coefficients électro-optiques de signes mutuellement opposés, de sorte qu'un champ électrique de modulation de mêmes direction et orientation dans les sections de guide d'ondes entraîne des modulations d'indice de réfraction de signes opposés dans les sections de guide d'ondes.

2. Modulateur électro-optique coplanaire intégré avec guide d'ondes optiques selon la revendication 1, dans lequel lesdites sections de guide d'ondes et les régions de substrat respectives ayant des coefficients électro-optiques de signes opposés s'étendent sensiblement sur la région de modulation de dispositif entière.

3. Modulateur électro-optique coplanaire intégré avec guide d'ondes optiques selon la revendication 2, dans lequel ledit système d'électrodes comprend au moins deux électrodes de masse (80, 100), s'étendant chacune sur ladite section d'un guide d'ondes respectif, et au moins une électrode chaude (900) s'étendant entre les électrodes de masse, de manière à former un système d'électrodes de guides d'ondes coplanaires.

4. Modulateur électro-optique coplanaire intégré avec guide d'ondes optiques selon la revendication 2, dans lequel ledit système d'électrodes comprend une électrode chaude (900) s'étendant sur lesdites sections des guides d'onde, et au moins une électrode de masse (80, 100) s'étendant à côté de l'électrode chaude.

5. Modulateur électro-optique coplanaire intégré avec guide d'ondes optiques selon la revendication 4, dans lequel les guides d'ondes sont séparés d'une distance appropriée pour éviter sensiblement un couplage optique entre eux dans la région de modulation, l'électrode chaude comprenant une partie plus large (901) ayant une largeur égale ou supérieure à ladite distance, et une partie plus étroite (902) au-dessus de la partie plus large.

6. Modulateur électro-optique coplanaire intégré avec guide d'ondes optiques selon la revendication 2, dans lequel ledit système d'électrodes comprend deux électrodes chaudes (13, 15 ; 130, 150), s'étendant chacune sur ladite section d'un guide d'ondes respectif, pour recevoir une même tension de modulation (V), et au moins une électrode de masse (12, 14 ; 120, 140) s'étendant séparément des électrodes chaudes, de manière à former un système d'électrodes à deux bandes coplanaires.

7. Modulateur électro-optique coplanaire intégré avec guide d'ondes optiques selon la revendication 6, dans lequel ladite au moins une électrode de masse comprend deux électrodes de masse, s'étendant chacune séparément d'une électrode chaude respective d'un côté de celle-ci opposé à l'autre électrode chaude.

8. Modulateur électro-optique coplanaire intégré avec guide d'ondes optiques selon la revendication 7, dans lequel ledit système d'électrodes comprend un diviseur de puissance intégré (160, 130, 150) pour recevoir une tension de modulation (V) générée à l'extérieur et pour l'appliquer aux deux électrodes chaudes.

9. Modulateur électro-optique coplanaire intégré avec guide d'ondes optiques selon la revendication 8, dans lequel, à l'extérieur de ladite région de modulation, les guides d'ondes sont connectés optiquement au moyen de jonctions en Y (3, 5) respectives à un guide d'ondes d'entrée (2) et à un guide d'ondes de sortie (6), les deux électrodes chaudes fusionnant l'une avec l'autre au niveau desdites jonctions en Y et ayant des extensions (160, 170) sur les guides d'ondes d'entrée et de sortie.

10. Modulateur électro-optique coplanaire intégré avec guide d'ondes optiques selon la revendication 9, dans lequel les électrodes de masse s'étendent séparément desdites extensions de manière à former, en correspondance avec les guides d'ondes d'entrée et de sortie, des systèmes d'électrodes de guides d'ondes coplanaires.

11. Modulateur électro-optique coplanaire intégré avec guide d'ondes optiques selon l'une quelconque des revendications précédentes, dans lequel le substrat en matériau électro-optique est un substrat à coupe z de matériau ferroélectrique, en particulier de niobate de lithium, les régions ayant des coefficients électro-optiques de signes opposés étant des régions ayant des domaines ferroélectriques orientés à l'opposé l'un de l'autre.

12. Modulateur électro-optique coplanaire intégré selon la revendication 1, dans lequel le substrat de matériau électro-optique est un substrat à coupe z de matériau ferroélectrique, en particulier de niobate de lithium, les régions ayant des coefficients électro-optiques de signes opposés étant des régions ayant des domaines ferroélectriques orientés à l'opposé l'un de l'autre, ledit système d'électrodes comprenant une électrode chaude et une électrode de masse.

13. Modulateur électro-optique comprenant un modulateur électro-optique coplanaire intégré (201 ; 301) avec guide d'ondes optiques selon l'une quelconque des revendications précédentes, et un élément dé commande électrique (209 ; 311, 312) adapté pour délivrer au système d'électrodes un potentiel de commande unipolaire (V).

14. Station de transmission pour un système de communication optique, comprenant au moins des moyens de génération de faisceau optique (208 ; 310) pour générer un faisceau optique et un modulateur électro-optique selon la revendication 13.
